# EUROPEAN PATENT SPECIFICATION

(11) **EP 1 407 993 B1**
(45) Date of publication and mention of the grant of the patent: **28.12.2005**
(21) Application number: 02079181.0
(22) Date of filing: 08.10.2002
(51) Int. Cl.: B65G 69/04

(54) **A device for loading a container with loose solid material**
Vorrichtung zum Laden von Schüttgut in einem Behälter
Dispositif permettant de charger des matériaux en vrac dans un contenant

(43) Date of publication of application: 14.04.2004
(73) Proprietor: IDR HOLDING S.A., 2086 Luxembourg (LU)
(72) Inventor: Remakel, Fernand, 1522 Luxembourg (LU)
(74) Representative: Gotra, Stefano

(56) References cited:
- NL-C- 1 009 272
- US-A- 1 590 866
- US-A- 4 167 248
- US-A- 4 272 028
- PATENT ABSTRACTS OF JAPAN vol. 007, no. 092 (M-208), 16 April 1983 (1983-04-16) & JP 58 017026 A (ISEKI NOKI KK), 1 February 1983 (1983-02-01)
- PATENT ABSTRACTS OF JAPAN vol. 010, no. 353 (M-539), 28 November 1986 (1986-11-28) & JP 61 150937 A (NIPPON STEEL CHEM CO LTD;OTHERS: 01), 9 July 1986 (1986-07-09)

## Description

Specifically, though not exclusively, the invention is usefully applied in filling a cistern, for example a lorry container hold, with loose granular material.

The device of the invention serves for laterally dispersing loose material being introduced into the container, so that the container is filled in the most efficient way possible. Devices of this kind have been taught, for example, in patent documents US 5735319, EP 0022742, DE 8812734 U and JP-A-58017026.

The main aim of the present invention is to provide a loading device with a rotary distributor, constructionally simple and economical and having a small mass, for obtaining a uniform and complete distribution of the loose material, in granular or powder form, when loaded in a container.

An advantage of the invention is to realise a device which is constructionally simple and economical in both versions thereof, i.e. with a rotary distributor and with a static distributor.

A further advantage is to reduce to a minimum all contact of the material with parts of the device which might pollute or corrode the material itself.

A further advantage is to reduce the possibility of triggering combustion or explosion during powder material loading, when the material is of such a type that a risk exists.

These aims and others besides are all attained by the present invention, as it is characterised in the accompanying claims.

Further characteristics and advantages of the invention will better emerge from the detailed description that follows, of a preferred but non-limiting embodiment illustrated purely by way of example in the accompanying figures of the drawings, in which:

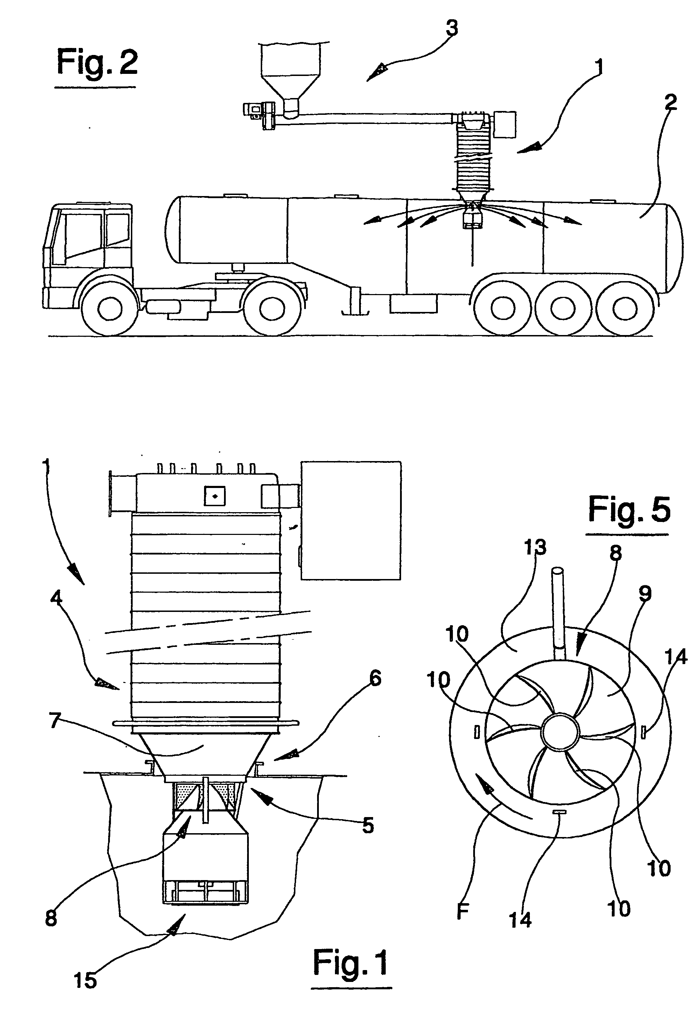

figure 1 is a vertical elevation of a device made according to the present invention;
figure 2 shows the device of figure 1 applied to loading a container drawn by a lorry;
figure 3 is a perspective view of the rotary distributor of the device of figure 1;
figure 4 is a vertical section of the rotary distributor of figure 3;
figure 5 is a plan view from above of figure 4;

With reference to the above-cited figures, 1 denotes in its entirety a device for loading a container with solid loose material. In the illustrated example the container to which the device is associated is a container 2 towed by a vehicle. The material to be loaded is a granular or powder product which is sent to the loading device 1 using a known-type means of transport, which is indicated in its entirety by 3.

The loading device 1 comprises a material infeed conduit 4 having an adjustable vertical axis, adjustable in an axial direction, having an elongated tubular shape and being able to be shortened.

The infeed conduit 4 inferiorly exhibits a discharge outlet 5 which faces downwards and destined to be inserted in an inlet 6 of the container to be loaded. The discharge outlet 5 is predisposed at the lower end of a truncoconical discharge mouth 7 converging downwards.

The device 1 further comprises a rotary distributor 8 connected to the conduit 4, located below the conduit 4 and in front of the discharge outlet 5 for lateral dispersion of the material inside the container 2.

The rotary distributor 8 has a truncoconical base 9, or in any case a base having a convergence in an upwards direction, coaxial to the rotation axis x-x and provided with projecting elements in the form of blades 10, distributed in a circumferential direction. Each blade 10 is provided with an active front surface arranged at an angle with respect to a radius of the distributor. The angle of the active front surface of the blades 10 is backwards, with reference to blade rotation advancement direction F.

The distributor 8 is set in rotation by a motor located below the distributor 8. The motor 11 has a rotor 12 which projects upwards and is directly and coaxially connected to the distributor 8. The motor 11 is preferably electrically or pneumatically driven.

A domed cover 13 is predisposed below the distributor 8, to protect the motor 11. The cover 13 has an upper truncoconical (or at least upwardly-converging) part, and a lower cylindrical part. Both parts are coaxial to the rotation axis x-x of the distributor 8. The cover 13 is solidly connected to the infeed conduit 4 by a plurality of vertical joint ribs 14.

The device comprises a sensor 15 of known type for detecting the material tipped into the container 2. The sensor 15 emits a full-load signal each time the amount of material in the container 2 reaches a predetermined level; this signal is used to bring material infeeding to a halt. The sensor 15 has a rotating organ powered by a motor 16 which is separate from the motor 11 powering the distributor.

The dome 13 contains both the motor 11 powering the distributor 8 and the underlying motor 16 for actuating the sensor 15 detecting state of container filling.

During operation, the loading device 1 is applied on the container 2 to be filled with the granular or powder material, by inserting the rotary distributor 8 and the bottom end of the infeed conduit 4 through the container infeed hatch. The material is fed through the device 1 and is distributed internally of the container 2 by tipping the material onto the rotary distributor 8 while it is rotating. The rotary distributor 8 laterally casts the material over a 360° range inside the container 2 in a more or less horizontal direction and at a considerably fast rate. The result is that the filling operation is optimal, even where the container 2 is horizontally of large dimensions.

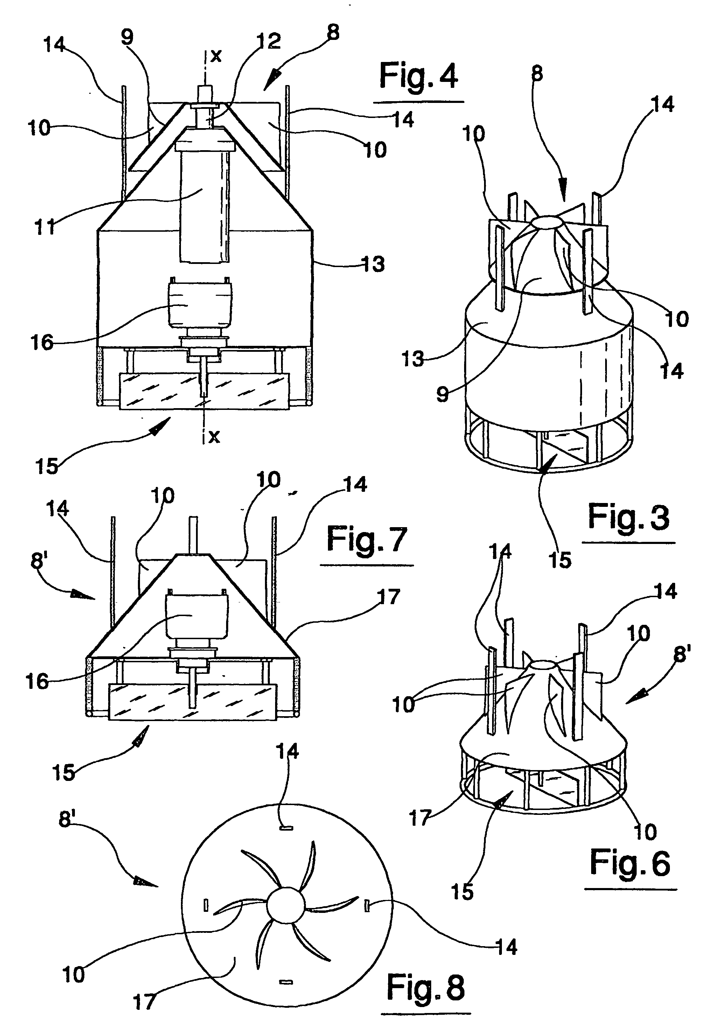

The profile of each blade 10, seen in plan view, is curved so that the peripheral end has a considerable tangential component, decidedly greater than that of the central end, in which the radial component predominates. Seen in vertical elevation (figure 7) each blade 10 is more or less triangular in shape and exhibits a height (in vertical direction) which gradually increases from the centre towards the periphery, reaching a maximum on the periphery and a minimum (practically zero) in the centre.

The distributor of the invention, enables casting of the material sideways to a considerable distance from the point of ingress of the material inside the container.

## Claims

1. A device for loading a container with loose solid material, comprising:
an infeed conduit (4) of material having at least one discharge outlet (5) facing downwards and destined for insertion in an inlet (6) of the container to be loaded;
a rotary distributor (8) constrained to the infeed conduit (4) located below the infeed conduit (4) and in front of the discharge outlet (5) for distribution of the material in the container (2);
a motor (11) for rotating the distributor (8), having a rotor (12) which is directly connected to the distributor (8);
said motor (11) being located below the distributor (8);
**characterised in that** a static protection dome cover (13) is located below the distributor (8), which cover (13) protects the motor (11).

2. The device of claim 1, **characterised in that** the cover (13) has at least an upper part which is truncoconical and coaxial to the rotation axis (x-x) of the distributor (8).

3. The device of claim 1 or 2, **characterised in that** the cover (13) is solidly constrained to the infeed conduit (4).

4. The device of any one of the preceding claims, **characterised in that** the rotary distributor (8) has a truncoconical base shape, converging in an upwards direction coaxially to the rotation axis (x-x).

5. The device of any one of the preceding claims, **characterised in that** the rotary distributor (8) is provided with projecting elements (10), each of which is provided with a front surface which is arranged at an angle with respect to a radial arrangement

6. The device of claim 75, **characterised in that** the angling of the active front surface of the projecting elements (10) is backwards-directed, with reference to an advancement rotary direction (F) of the distributor.

## Patentansprüche

1. Vorrichtung zum Laden eines Behälters mit Schüttgut, enthaltend:
- eine Zuführleitung (4) des Materials, welche wenigstens einen Entladeauslass (5) hat, nach unten gerichtet und dazu bestimmt, in einen Einlass (6) des zu ladenden Behälters eingesetzt zu werden;
- einen rotierenden Verteiler (8), gehalten an der Zuführleitung (4) und angeordnet unterhalb der Zuführleitung (4) und vor dem Entladeauslass (5) zum Verteilen des Materials in dem Behälter (2);
- einen Motor (11) zum Drehen des Verteilers (8) mit einem Rotor (12), welcher direkt an den Verteiler (8) angeschlossen ist; wobei der genannte Motor (11) unterhalb des Verteilers (8) angeordnet ist;
**dadurch gekennzeichnet, dass** eine statische kuppelartige Schutzabdeckung (13) unterhalb des Verteilers (8) angeordnet ist, welche Abdeckung (13) den Motor (11) schützt.

2. Vorrichtung nach Patentanspruch 1, **dadurch gekennzeichnet, dass** die Abdeckung (13) wenigstens einen oberen Teil hat, welcher stumpfkegelförmig ist und koaxial zu der Umdrehungsachse (x-x) des Verteilers (8) verläuft.

3. Vorrichtung nach Patentanspruch 1 oder 2, **dadurch gekennzeichnet, dass** die Abdeckung (13) fest an der Zuführleitung (4) gehalten ist.

4. Vorrichtung nach einem beliebigen der vorstehenden Patentansprüche, **dadurch gekennzeichnet, dass** der rotierende Verteiler (8) eine stumpfkegelförmige Basis hat, die nach oben in einer Richtung koaxial zu der Drehachse (x-x) konvergiert.

5. Vorrichtung nach einem beliebigen der vorstehenden Patentansprüche, **dadurch gekennzeichnet, dass** der rotierende Verteiler (8) mit hervorstehenden Elementen (10) versehen ist, von denen jedes eine Frontfläche aufweist, welche im Verhältnis zu einer radialen Anordnung in einem Winkel angeordnet ist.

6. Vorrichtung nach Patentanspruch 5, **dadurch gekennzeichnet, dass** die Winkelstellung der aktiven Frontflächen der hervorstehenden Elemente (10) unter Bezugnahme auf eine fortlaufende Drehrichtung (F) des Verteilers nach hinten gerichtet ist.

## Revendications

1. Dispositif permettant de charger un contenant en matériaux solides en vrac, comprenant:
- un conduit d'alimentation (4) de matériau ayant au moins une sortie d'évacuation (5) orientée vers le bas et destinée à l'insertion dans une entrée (6) du conteneur à charger;
- un distributeur rotatif (8) relié au conduit d'alimentation (4) disposé au-dessous du conduit d'alimentation (4) et en face de la sortie d'évacuation (5) pour la distribution du matériau dans le conteneur (2);
- un moteur (11) de mise en rotation du distributeur (8), muni d'un rotor (12) directement connecté au distributeur (8);
ledit moteur (11) étant disposé au-dessous du distributeur (8);
**caractérisé en ce qu'**une coupole statique de protection (13) est disposée au-dessous du distributeur (8), laquelle coupole (13) protège le moteur (11).

2. Dispositif selon la revendication 1, **caractérisé en ce que** la coupole (13) présente au moins une partie supérieure en tronc de cône et coaxiale à l'axe de rotation (x-x) du distributeur (8).

3. Dispositif selon la revendication 1 ou 2, **caractérisé en ce que** la coupole (13) est solidaire du conduit d'alimentation (4).

4. Dispositif selon n'importe laquelle des revendications précédentes, **caractérisé en ce que** le distributeur rotatif (8) présente une base en forme de tronc de cône, convergeant dans une direction vers le haut de manière coaxiale à l'axe de rotation (x-x).

5. Dispositif selon n'importe laquelle des revendications précédentes, **caractérisé en ce que** le distributeur rotatif (8) est pourvu d'éléments saillants (10), chacun desquels étant pourvu d'une surface frontale disposée angulairement par rapport à une disposition radiale.

6. Dispositif selon la revendication 5, **caractérisé en ce que** l'angulation de la surface frontale active des éléments saillants (10) est dirigée vers l'arrière, en référence à la direction rotative d'avancement (F) du distributeur.
